# EUROPEAN PATENT APPLICATION

(11) **EP 4 762 908 A1**
(43) Date of publication of application: **24.06.2026**
(21) Application number: 25216166.6
(22) Date of filing: 17.11.2025
(51) Int. Cl.: A01D 34/78, A01D 34/80

(54) **GRASS MOWING MACHINE**

(30) Priority: 20.12.2024 US 202418990049
(71) Applicant: Deere & Company, Moline, IL 61265 (US)
(72) Inventor: APPAIAN, Thirumal, 68163 Mannheim (DE); HALL, Stanley K, 68163 Mannheim (DE); GUILLORY, Chris, 68163 Mannheim (DE)
(74) Representative: Reichert, Christian

(57) **Abstract**

A grass mowing machine (100) is disclosed. The grass mowing machine (100) comprising: a power source (136); an electric current source; a hydraulic system, a plurality of mower cutting units each having at least one blade (154) and wherein at least one mower cutting unit having at least one blade (154) is powered by said hydraulic system and at least one mower cutting unit having at least one blade (154) is powered by said electric current.

## Description

### TECHNICAL FIELD

The present disclosure relates generally to grass mowing machines, and more specifically to systems, devices, and methods for grass mowing machines having hydraulic and electric driven cutting units.

### BACKGROUND

Grass mowing machines, or mowers, may include multiple cutting units. Each cutting unit may include at least one blade that is configured to cut grass. In some machines, having multiple cutting units provides a greater mowing width. Moreover, in some machines, multiple cutting units may provide a variable mowing width. Specifically, one or more cutting units may be disabled, for example one or both of the outermost cutting units. One or more cutting units may be movable to change the overall width of the machine. Grass mowing machines having multiple cutting units may be used in a variety of applications, including but not limited to commercial applications and/or golf applications.

### SUMMARY

In one aspect of the invention, a grass mowing machine is provided. The grass mowing machine includes a plurality of mower cutting units each including at least one mower blade. At least one mower blade is powered a hydraulic motor, and at least one mower blade is powered by an electric motor. The grass mowing machine further includes a controller that commands activation of at least one mower blade powered a hydraulic motor and at least one mower blade powered by an electric mower.

The grass mowing machine may further include at least one power source. Such a power source may be an internal combustion engine. The grass mowing machine may further include an alternator that generates current to power the electric motor. The grass mowing machine may include a plurality of mower decks that each house a mower blade. A plurality of the blades may be powered by a hydraulic motor, and a plurality of the blades may be powered by an electric motor.

In another aspect of the invention, a grass mowing machine is provided that includes a power source, an electric current source, a hydraulic system, and a plurality of mower cutting units. Each of the cutting units may include at least one blade. Moreover, at least one mower cutting unit having at least one blade is powered by the hydraulic system and at least one mower cutting unit having at least one blade is powered by the electric current.

In yet another aspect of the invention, a grass mowing machine is provided that includes an internal combustion engine, an alternator configured to generate current from an output of said internal combustion engine, a hydraulic system including a plurality of valves, a plurality of hydraulic mower decks, a plurality of electric mower decks, one or more inventers, and a controller. The hydraulic mower decks may each have at least one blade which is powered by a hydraulic motor. A first portion of the hydraulic motors may be activated by a first valve, and a second portion of the hydraulic motors may be activated by a second valve. With respect to the plurality of electric mower decks having at least one blade, each blade may be powered by an electric motor. Moreover, at least a portion of the electric mower decks may be wing decks. The controller may be configured to command the valves and inverter(s) to activate the blades.

### BRIEF DESCRIPTION OF THE DRAWINGS

The detailed description of the drawings refers to the accompanying figures.
FIG. 1 is a perspective view of an implementation of a grass mowing machine of the present invention.
FIG. 2 is perspective view of the grass mowing machine of FIG. 1 wherein the hood has been removed.
FIG. 3 is a top view of the grass growing machine of FIG. 2.
FIG. 4 is a side view of the grass growing machine of FIG. 2.
FIG. 5A is a cross-section of a hydraulic deck of the grass mowing machine of FIG. 1.
FIG. 5B is a cross-section of an electric deck of the grass mowing machine of FIG. 1.
FIG. 6 is a schematic of an implementation of a controller of the present invention.

Like reference numerals are used to indicate like elements throughout the several figures.

### DETAILED DESCRIPTION

The following is a detailed description of one or more embodiments of technology, including systems, methods, and apparatuses, for a grass mowing machine having a plurality of cutting units wherein one or more cutting units are hydraulic driven and one or more cutting units are electric driven.

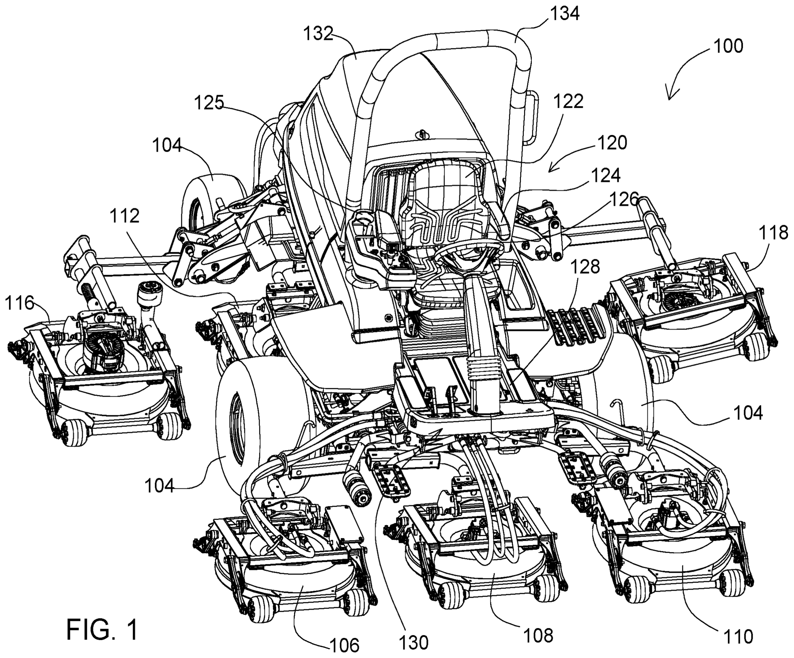

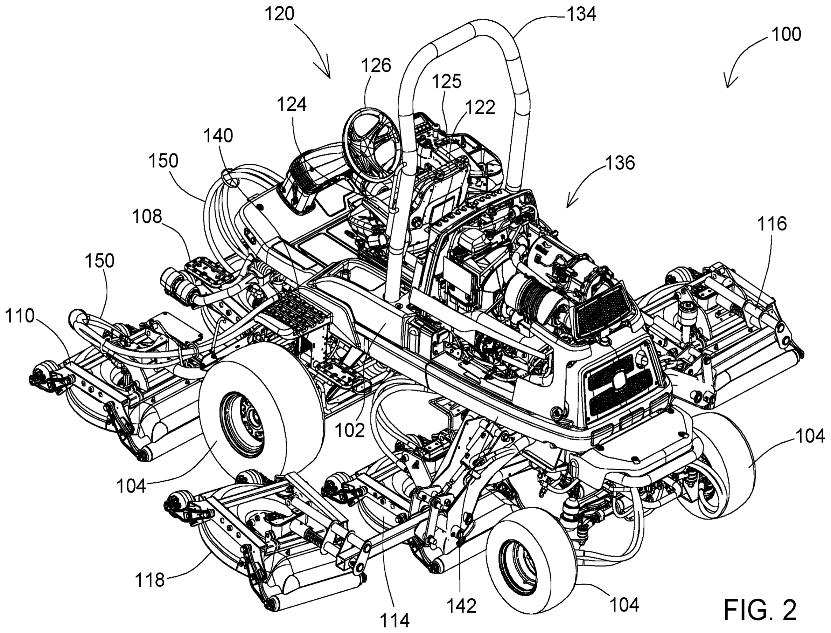

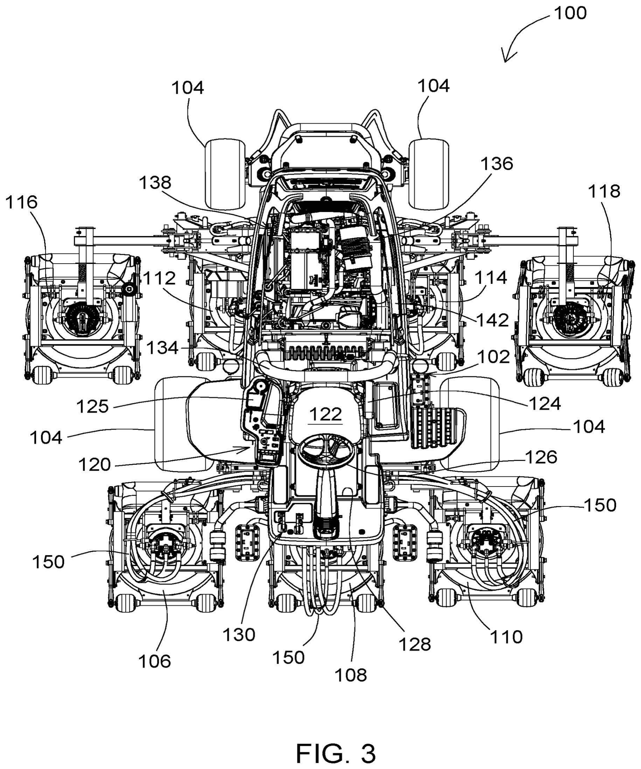

Referring to FIG. 1, an implementation of a grass mowing machine or mower 100 of the present invention is provided. The mower 100 may include a frame 102 (shown in FIG. 2) supported by one or more ground engaging members 104. Extending from the frame may be a plurality of cutting units. Cutting units may include, but are not limited to, mowing decks and mowing reels. The illustrated implementation includes decks 106, 108, 110, 112, 114 (shown in FIGS. 2, 3), 116, 118. Other implementations of mowers of the present invention may include less than seven decks or more than seven decks. The mower may further include an operator station 120. In the illustrated embodiment, the operator station 120 includes a seat 122, armrests 124, 125, a steering wheel 126, a foot platform 128, and one or more foot pedals 130. In other, non-illustrated embodiments, the operator station may exclude a seat and be designed for an operator to stand on the operator station and/or walk behind the operator station. In some implementations, one or more control levers may be used to steer the machine, such as in a zero-turn radius ("ZTR") machine. In other implementations, an operator station may be omitted from the mower entirely. The mower 100 may include a hood 132 to cover a plurality of parts. The mower 100 may further include a rollover protection system ("ROPS") 134.

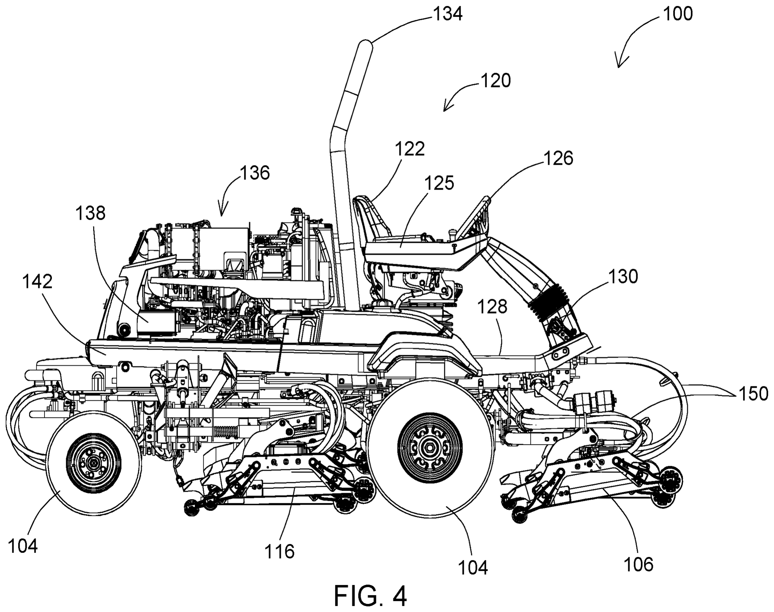

Referring to FIGS. 2 and 3, views of the mower 100 are shown with the hood 132 removed. The mower 100 includes a power source. The power source may be any type suitable for powering the mower 100. Examples include, but are not limited to, an internal combustion engine, batteries, and a hybrid engine. Shown is an internal combustion engine 136 and its auxiliaries. In addition, an alternator 138 is shown in FIGS. 3 and 4. In some implementations, the alternator 138 may be belt driven by the power source, such as internal combustion engine 136. In such implementations, the belt (not shown) drives the alternator to generate electric current. A wiring harness (not shown) may connect the alternator to one or more components of mower 100. The alternator may provide electrical current to the mower systems. In one or more implementations, more or less than one alternator may be used. Referring to FIG. 2, the mower 100 further includes a controller 140, sometimes called a control unit, vehicle control unit, or VCU.

As noted above and illustrated in FIG. 3, the illustrated implementation includes seven mower decks 106, 108, 110, 112, 114, 116, 118. One or more decks may be powered via a hydraulic system. In the illustrated implementation, decks 106, 108, 110, 112, 114 are powered via a hydraulic system. The hydraulic system may include a reservoir tank 142 filled with hydraulic fluid, a hydraulic pump (not shown), one or more valves (not shown), and one or more hydraulic motors 148. The hydraulic system may further include a cooling device (not shown) to cool hydraulic fluid before it is returned to tank 142. Tubes 150 may be used to transport the hydraulic fluid between the components of the hydraulic system. The hydraulic system may include more or fewer components. The hydraulic system may drive one or more mower decks. In the illustrated implementation, the hydraulic system drives five decks 106, 108, 110, 112, and 114. Other implementations may include less than five hydraulic decks or more than five hydraulic decks. The hydraulic decks may be in any position.

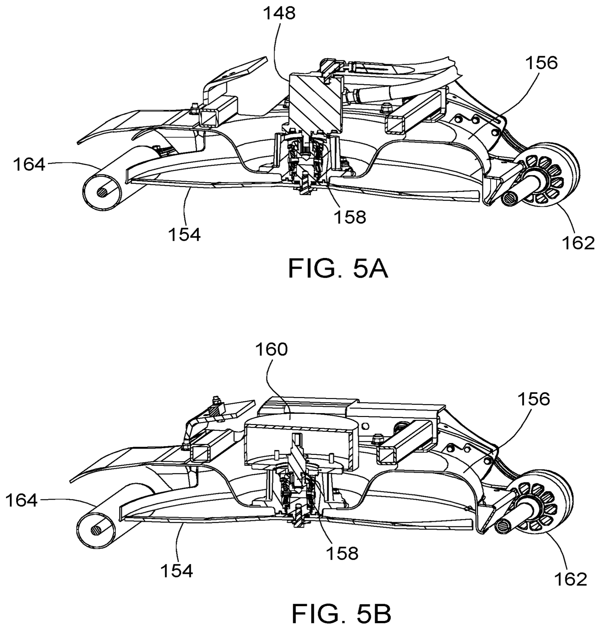

FIG. 5A is a cross-section of an exemplary hydraulic deck 106, 108, 110, 112, or 114. The hydraulic deck 106, 108, 110, 112, or 114 may include a housing 156 that at least partially covers at least one blade 154, such as a rotary blade. A hydraulic motor 148 is also shown, which may be located above the hydraulic deck 106, 108, 110, 112, or 114, such as near the center. The hydraulic motor 148 may be in operational engagement with a spindle 158. The spindle 158 may be rotated by the hydraulic motor 148. The blade 154 may be mounted on the spindle 158. As such, blade 154 may spin with the spindle 158. The activity of one or more of the hydraulic motors 148 may be commanded by the controller 140, as described in further detail below. Each deck 106, 108, 110, 112, 114, may be supported by front caster wheels 162 and rear trailing wheels 164.

One or more decks may be electrically driven, such as decks 116, 118. FIG. 5B is a cross-section of an exemplary electric deck 116 or 118. An electric deck may also include a housing 156 at least partially covering a blade 154, such as a rotary blade. Electric decks 116 or 118 may each include an electric motor 160, such as on top of the deck. In the illustrated implementation, the electric motor 160 may be located near the center of the housing 156. The electric motor 160 may be in operational engagement with a spindle 158. The electric motor 160 may cause the spindle 158 to rotate or spin. Blade 154 may be in operational engagement with spindle 158 such that blade 154 rotates or spins with spindle 158. In one or more implementations, the electric motor may be a 4kW to an 8kW electric motor, although any kW motor may be used without departing from the scope of the invention. Each deck 116, 118 may be supported by front caster wheels 162 and rear trailing wheels 164.

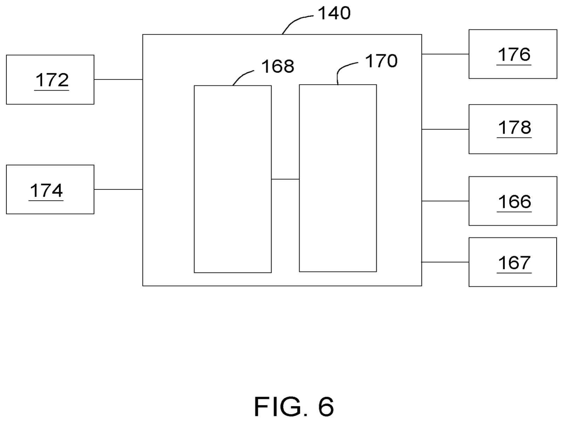

In one or more implementations, electric motor 160 may receive power from alternator 138. More specifically, a wiring harness (not shown) may be connected to alternator 138 wherein one or more wires connect the alternator 138 and the electric motor(s) 160. Moreover, in one or more implementations, the electric current may be first routed through or connected to one or more inverters. In the illustrated implementation, two invertors 166, 167 are shown (see FIG. 6). In the illustrated implementation, each inverter is associated with a single electric motor 160. In one or more implementations, electric motor 160 may be powered by one or more batteries, such as a battery pack. The activity of one or more of the electric motors 160 may be commanded by the controller 140, as described in further detail below. In the illustrated embodiment, the electric decks 116 and 118 are the two outer or wing decks, which may be located on the left and right sides of the mower 100. Other implementations may include less than two or more than two electric decks, which may be in any position.

In one or more implementations, one or more decks may be movable between two or more positions. For example, one or more decks may be movable between lifted and lowered positions. The lifted position may be desirable for transport, while the lowered position may be desirable for mowing. In the lifted and lowered positions, the decks may be approximately horizontal and/or parallel to the ground. In addition, one or more decks may be pivotable between two or more positions. For example, in one or more implementations, the outer two decks 116, 118 may be pivotable between first and second positions. In some implementations, the first position may be approximately horizontal and parallel to the ground. The first position may be one of the lifted and lowered positions described above. The second position may be at an angle to the ground, such as approximately vertical.

The mower 100 may include a controller 140. The controller may be configured to activate one or more blades 154. In one or more implementations, mower 100 may have one or more operator inputs. For example, one operator input may turn the power take off (PTO) on or off as desired by an operator. When the PTO is on, the blades may be activated to cut or mow grass. When the PTO is off, the blades may be deactivated. In the illustrated implementation having rotary blades, when the PTO is on, the blades may rotate or spin; when the PTO is off, the blades may not rotate or spin. Moreover, an operator input may cause the decks to move between lifted and lowered positions as discussed above. It will be understood by one of skill in the art that mower 100 may have less than two operator inputs, such as one or zero operator inputs, or more than two operator inputs, such as three, four, five, six, seven, eight, nine, ten, or more operator inputs. Operator inputs may be any desired input. The controller 140 may be configured to receive operator inputs and activate and/or deactivate one or more blades 154.

Referring to FIG. 6, the controller 140 may include at least one memory 168 and at least one processor 170. The processor 170 may be communicatively coupled to the memory 168. The memory 168 communicates with the processor 170 and may be used to store programs and other software and information (such as in the form of data). The memory 168 may further include instructions that may be executed by the processor 170 to execute the methods described herein. The processor 170 is operable to execute programs and software and receive information and send information to the memory 168. Although a single memory 168 and a single processor 170 are illustrated, in other implementations a plurality of memories, processors, or both may be used. Although the processor 170 and memory 168 are shown as being local components of controller 140, in other implementations, one or both of the processor 170 and memory 168 may be located remotely.

As noted above, the controller 140 may receive one or more inputs. For example, the controller may receive one or more operator inputs, including, but not limited to, the PTO on/off 172 and raise/lower 174 inputs described above. The controller 140 may also be configured to command one or more outputs. For example, the controller 140 may be configured to command activation of one or more blades. In the illustrated embodiment, the controller 140 is configured to command one or more valves associated commanding the hydraulic system and more specifically the hydraulically driven decks. In the illustrated embodiment, a first mow valve 176 and a second mow valve 178 are controlled by controller 140. Moreover, the controller 140 is configured to command activation of one or more electric motors to activate the one or more blades associated with the electric motor(s). In some implementations, the controller 140 may be configured to activate and/or deactivate one or more inverters 166, 167 that provide appropriate power to one or more electric motors 160. The controller 140 may be configured to control the timing of blade activation and deactivation in one or more hydraulic decks 106, 108, 110, 112, 114 and one or more electric decks 116, 118. In this way, the timing of blade activation and deactivation of the electric and hydraulic decks may be synchronized and/or timed as desired and/or required by a particular implementation. In one or more implementations, the controller 140 may be configured to command activation of the blade(s) of one or more decks 106, 108, 110, 112, 114, 116, 118 when any arrangement of one or more inputs is met. In one or more implementations, the controller may be configured to command activation of the blade(s) of one or more decks 106, 108, 110, 112, 114, 116, 118 when an input is set to PTO on. In one or more implementations, the controller may be configured to command activation of the blade(s) of one or more decks 106, 108, 110, 112, 114, 116, 118 when an input is set to PTO on and one or more decks 106, 108, 110, 112, 114, 116, 118 are in the lowered position.

In one or more implementations, the controller 140 may be configured to command deactivation of the blade(s) of one or more decks 106, 108, 110, 112, 114, 116, 118 when any arrangement of one or more inputs is met. In one or more implementations, controller 140 may be configured to deactivate the blade(s) of one or more decks 106, 108, 110, 112, 114, 116, 118 when an input is set to PTO off. In one or more implementations, controller 140 may be configured to deactivate the blade(s) of one or more decks 106, 108, 110, 112, 114, 116, 118 when one or more decks 106, 108, 110, 112, 114, 116, 118 are in the raised transport position. In one or more implementations, controller 140 may be configured to deactivate the blade(s) of one or more decks 106, 108, 110, 112, 114, 116, 118 when an input is set to PTO off and one or more decks 106, 108, 110, 112, 114, 116, 118 are in the raised transport position.

In one or more implementations, the controller 140 may be configured to determine whether the blades of a portion of the decks 106, 108, 110, 112, 114, 116, or 118 should be activated while the blades of a portion of the decks 106, 108, 110, 112, 114, 116, or 118 should be deactivated. In one example of an implementation, controller 140 may determine whether pivotable decks 116, 118 are in a first position or a second position. The controller 140 may command activation when the decks 116, 118 are in a first position but not in a second position.

A grass mowing machine or mower 100 of the present invention may have one or more advantages. In some implementations, a hydraulic system can operate more efficiently than an electric system. Yet, a hydraulic system may add complexity that can be reduced or eliminated with an electric system. A less complex system can be desirable for decks in certain positions, such as pivotable decks. Moreover, in implementations including more than one electric deck, the decks may be activated and/or deactivated independently of each other.

Although various representative embodiments of this invention have been described above with a certain degree of particularity, those skilled in the art could make numerous alterations to the disclosed embodiments without departing from the spirit or scope of the inventive subject matter set forth in the specification and claims. Joinder references (e.g. attached, adhered, joined, connected) are to be construed broadly and may include intermediate members between a connection of elements and relative movement between elements. As such, joinder references do not necessarily infer that two elements are directly connected and in fixed relation to each other. In some instances, in methodologies directly or indirectly set forth herein, various steps and operations are described in one possible order of operation, but those skilled in the art will recognize that steps and operations may be rearranged, replaced, or eliminated without necessarily departing from the spirit and scope of the present invention. It is intended that all matter contained in the above description or shown in the accompanying drawings shall be interpreted as illustrative only and not limiting. Changes in detail or structure may be made without departing from the spirit of the invention as defined in the appended claims.

## Claims

1. A grass mowing machine (100), comprising:
a power source (136);
an electric current source;
a hydraulic system,
a plurality of mower cutting units each having at least one blade (154) and
wherein at least one mower cutting unit having at least one blade (154) is powered by said hydraulic system and at least one mower cutting unit having at least one blade (154) is powered by said electric current.

2. The grass mowing machine (100) of claim 1 wherein said hydraulic system includes at least one valve (176, 178) configured to regulate flow of hydraulic fluid to at least one hydraulic motor (148), wherein said at least one hydraulic motor (148) is configured to power said blade (154) powered by said hydraulic system.

3. The grass mowing machine (100) of claim 1 or 2, further comprising at least one electric motor configured to power said at least one blade (154) powered by said electric current.

4. The grass mowing machine (100) of one of the claims 1 ton 3, further comprising an alternator (138) to generate said electric current.

5. The grass mowing machine (100) of claim 4 further comprising an inverter (166, 167) between said alternator (138) and said electric motor.

6. The grass mowing machine (100) of one of the claims 1 ton 5, further comprising a controller (140).

7. The grass mowing machine (100) of claim 6, wherein said controller (140) comprises at least one processor (170) and at least one memory (168), the controller (140) operable to:
activate said at least one valve (176, 178) to regulate flow of hydraulic fluid to at least one hydraulic motor (148); and
activate said inverter (166, 167) to power said electric motor.

8. The grass mowing machine (100) of claim 6 or 7, wherein said controller (140) is further operable to receive one or more inputs.

9. The grass mowing machine (100) of claim 8, wherein at least one of said one or more inputs is an operator input.

10. The grass mowing machine (100) of one of the claims 1 to 9, further comprising:
a plurality of mower decks (106, 108, 110, 112, 114, 116, 118) each having at least one blade (154) and wherein at least one mower deck (106, 108, 110, 112, 114, 116, 118) having at least one blade (154) is powered by said hydraulic system;
a plurality of mower decks (106, 108, 110, 112, 114, 116, 118) having at least one blade (154) is powered by said electric current, wherein said mower decks (106, 108, 110, 112, 114, 116, 118) having at least one blade (154) powered by said electric current are wing decks.

11. The grass mowing machine (100) of claim 10, wherein said wing decks are movable between a first position and a second position.
